(19) Europäisches Patentamt
European Patent Office
Office européen des brevets

(11) **EP 3 554 197 B1**

(12) **EUROPEAN PATENT SPECIFICATION**

(45) Date of publication and mention
of the grant of the patent:
**21.07.2021 Bulletin 2021/29**

(51) Int Cl.:
*H05B 45/37* (2020.01)   *H05B 45/325* (2020.01)
*H05B 45/10* (2020.01)   *H05B 45/3725* (2020.01)

(21) Application number: **19168208.7**

(22) Date of filing: **09.04.2019**

(54) **METHOD AND DEVICE FOR DRIVING A LIGHT SOURCE**

VERFAHREN UND VORRICHTUNG ZUM ANSTEUERN EINER LICHTQUELLE

PROCÉDÉ ET DISPOSITIF PERMETTANT DE COMMANDER UNE SOURCE LUMINEUSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.04.2018 IT 201800004347**

(43) Date of publication of application:
**16.10.2019 Bulletin 2019/42**

(73) Proprietor: **TESI Elettronica S.r.l.**
**25015 Desenzano del Garda, Brescia (IT)**

(72) Inventor: **LAZZARONI, Marco**
**25015 Desenzano del Garda, Brescia (IT)**

(74) Representative: **Chimini, Francesco**
**Jacobacci & Partners S.p.A.**
**Piazza della Vittoria 11**
**25122 Brescia (IT)**

(56) References cited:
**WO-A1-2015/121079     CN-B- 105 764 204
US-A1- 2014 361 704     US-A1- 2016 360 589**

**Description**

The present invention relates to a method and a device for driving a light source, e.g., an LED source.

Methods and devices for driving a light source are already known using an electronic device, known as a switching driver, which generates a substantially constant driving current controlled by a square wave switching signal having a frequency usually between 50 KHz and 1 MHz. The switching driver is driven by a pulse-type periodic dimming signal, typically a pulse-width modulation signal (known as a "PWM" signal). The duration of the dimming pulse with respect to the duration of the period, also known by the English term "duty cycle", can be modulated to obtain a desired luminosity value lower than a maximum luminosity value obtainable with a duration of the dimming pulse equal to the duration of the period of the dimming signal. Examples of known methods and devices for driving a lighting source are disclosed in US 2014/361704 A1, US 2016/360589 A1, WO 2015/121079 A1 and CN 105 764 204 B.

The driving devices described above, due to the very nature of the switching driver, do not offer a luminosity that can be represented by a rising monotonic function of the duty cycle applied, but alternate rising monotonic sections with sections in which the luminosity does not vary. The effect obtained, when, for example, a fade effect is desired (gradual switching on or off of the light source), is not fluid but proceeds in jerks. The effect is particularly visible at low intensities (low duty cycles).

Usually the dimming signal has a frequency greater than 100 Hz and is at least one order of magnitude lower than the operating frequency of the switching driver.

As mentioned, in the "on" phase of the duty cycle the switching driver is active and ensures that the output current is relatively constant over time. The instant the dimming signal goes into the active state, the output current is zero, the switching driver is in its active phase and begins to rise in an almost linear manner over time. With certain criteria depending on the type of driver, beyond a certain current threshold, the driver switches off and goes into its idle phase, and the output current falls in a linear manner over time, to then return to the active phase and repeat the cycle until the dimming signal in input goes into the idle state.

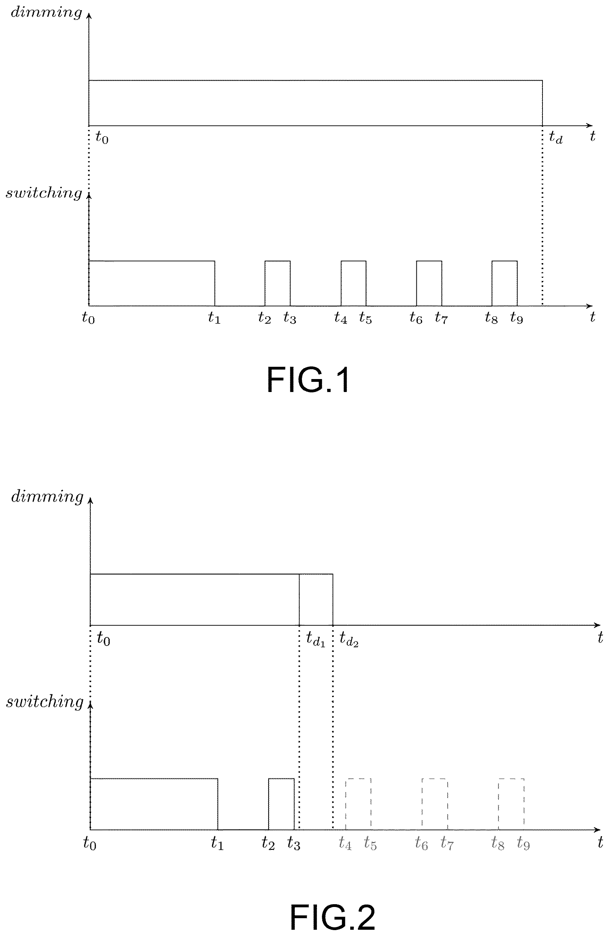

Figure 1 illustrates an example of the time trend of the dimming signal and the switching signal.

It may be observed that, although the switching signal depends, in terms of frequency and duty cycle, on the driver used and the LED load, it repeats itself substantially identically at each dimming signal period (except for a gradual change largely dependent on the temperature of the system components, including LEDs).

From the graphic representation in Figure 2 it may also be observed that a duty cycle dimming signal equal to di produces an output luminosity exactly equal to the duty cycle dimming signal equal to $d_2$.

This implies that by gradually increasing the duty cycle to obtain an increase in luminosity, the latter does not increase in an equally gradual manner, since the luminosity does not increase in the inactive phases of the switching signal.

The effect is negligible for high values of the duty cycle of the switching signal. Not so with low values, for which the length of the active part of the dimming produces a number of switching cycles of few units.

The visual effect obtained when gradually increasing or decreasing the dimming signal is a relatively unpleasant increase/decrease in light, which proceeds in seemingly discrete jerks instead of gradually changing.

In an RGB system (or RGBW, or in any case in a system with multiple colour components), in which 3 or 4 separate drivers are used, in addition to the problem just described, another is added. The activity and inactivity times of the various switching drivers do not exactly correspond; it follows that by imposing a certain proportion between the components and multiplying them all by a factor k(t) in order to maintain the colour while varying the luminosity, the non-linearity described produces, especially at low intensities, a deviation of the resulting chromatic coordinates, resulting from the non-linear behaviour described above.

The object of the present invention is to propose a method and a driving device of a light source able to overcome the above-mentioned drawbacks and in particular able to improve the dimming fluidity and precision of LED circuits driven by switching driver PWM signals.

Such purpose is achieved by a driving method according to claim 1 and with a driving device according to claim 6. The dependent claims describe preferred embodiments of the invention.

The characteristics and advantages of the driving method and the device according to the invention will, in any case, be evident from the description given below of its preferred embodiments, made by way of a nonlimiting example with reference to the appended drawings, wherein:

-    figure 1 illustrates an example of a dimming signal and the corresponding switching signal;
-    figure 2 shows an example of two different dimming signals producing an exactly identical signal in output;
-    figure 3 shows a comparison between the luminosity curve according to the prior art and the luminosity curve obtained by the driving method according to the invention;

-    figure 4 illustrates an example of a driving current of a light source and relative switching signal; and
-    figure 5 is a block diagram of a driving device of a light source according to the invention.

For simplicity and clarity of exposure, the following description refers to the concept of PWM modulation; however, it will be clear to a person skilled in the art that the teaching provided by the present invention can be applied to any type of modulation signal using pulses of a certain duration.

Let $L_{max}$ be the luminosity of the light source obtained by setting the duty cycle of the dimming signal to 100%; T the period of the dimming signal and $L_{target}$ the desired luminosity.

Let $t_{on}$ be the duration of the "on" part of the PWM dimming signal, calculated assuming that there is direct proportionality between the desired luminosity and the duty cycle. Let L(t) be the function that relates t to the luminosity.

With these assumptions the time $t_{on}$ such that $L(t_{on})= L_{target}$ is:

$$t_{on} = \frac{L_{target}}{L_{max}} \cdot T \qquad (1)$$

As explained above, however, with the switching driver the assumption made is incorrect due to the non-linearity inherent to the switching signal.

The idea behind the present invention is to make the L(t)function rising monotonic by "skipping" the "off" parts of the switching signal and "mapping" the "on" part of the switching signal over the entire period containing it.

Let $t_{on}$ be given, the dimming signal pulse time calculated by the equation (1). Let $f_{switching}$ (t) be the function that describes the switching signal between t = 0 and t = T:

$$f_{switching}(t) = \begin{cases} 1 & \text{if } t_{2k} \leq t < t_{2k+1} \\ 0 & \text{if } t_{2k+1} \leq t < t_{2k+2} \end{cases} , k \geq 0 \quad (2)$$

, in which function $t_k$ is a tuple, the even elements of which are the start times of the "on" parts of the switching signal ("rising edges ") and the odd elements are the end times ("falling edges") of the switching signal, as shown in Figures 1 and 2.

According to one aspect of the invention, the driving method involves calculating, on the basis of the switching signal, a modified duration $t'_{on}$ of the dimming signal pulse such that said pulse never ends in an instant of time in which the switching signal is equal to zero.

In particular, the modified duration $t'_{on}$ of the dimming signal pulse is equal to

$$t'_{on} = f(t_{on})$$
$$= \begin{cases} t_{on} & \text{if } 0 \leq t_{on} < t_1 \\ t_{2k+2} + \frac{t_{on} - t_{2k+1}}{t_{2k+3} - t_{2k+1}} (t_{2k+3} - t_{2k+2}) & \text{if } t_{2k+1} \leq t_{on} < t_{2k+3} \end{cases} \quad (3)$$

The time $t'_{on}$ thus calculated never falls during an inactive phase of the switching driver.

In fact when $t=t_1$, $t'_{on}$ is ti; as soon as $t>t_1$, $t'_{on}$ is just over $t_2$ and thus increases in a linear manner up to $t_3$ where $t'_{on}$ corresponds to $t_3$.

The switching signal is suitably measured so that the software implementing the driving method has the necessary data to perform this deformation.

It is to be noted that it has been experimentally verified that the dimming signal remains almost unchanged between one period of the dimming signal and the next. Any variations (mainly due to thermal deviations) are taken into account by measuring the switching signal at each cycle, applying a low-pass filter on the data obtained to compensate for any episodic signal reading errors.

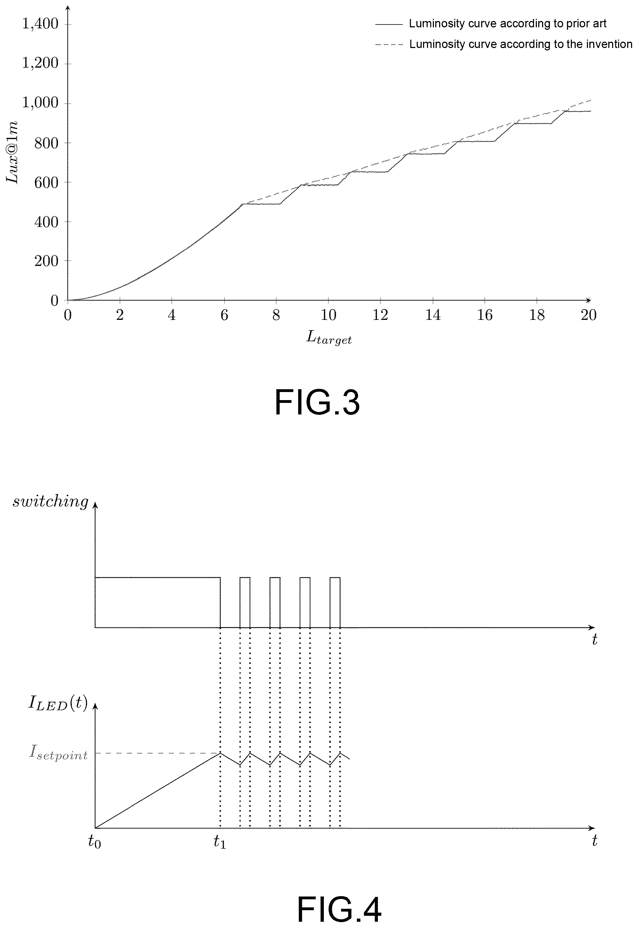

As can be seen from the graph in Figure 3, which shows, as a function of the required luminosity, a comparison between a luminosity curve obtained with the conventional driving method based on equation (1) and the luminosity curve obtained with the proposed driving method based on equation (3), the advantage in terms of dimming quality is evident and, except for the first section, the behaviour is linear.

The proposed solution therefore makes significantly more fluid and pleasant to the eye gradual increases and/or decreases in luminosity.

However, after applying the driving method described above, the luminosity obtained is not a linear function of the input variable.

This is due to the fact that the driver current $I_{LED}$ of the light source reaches the setpoint value in a non-negligible time. At the instant to in which the dimming signal pulse begins, the current is 0 and then begins to rise, for example in a linear manner due to the inductance usually used in this type of driver.

This trend of the driving current and relative switching signal is shown in Figure 4.

This does not cause particular problems in a monochromatic system: with the naked eye this slight imperfection is not perceptible. In RGB or RGBW systems, at low intensities (low duty cycles) this effect is visible because the current rise times may differ from one driver stage to another.

This factor means that while at duty cycle levels such that the rise time is negligible, the ratios between luminosity (and therefore colour) will also have negligible deviations, at low duty cycle levels there may be variations between these ratios, which are markedly perceptible. Note that the human eye is much more sensitive to colour deviations than it is to variations in intensity, for example.

According to another aspect of the invention, the information given by the switching signal is used to reconstruct the time trend of the driving current and therefore the luminosity obtained as a function of a certain input duty cycle value. After which, the duty cycle, i.e. the duration of the dimming pulse $t_{on}$, is "deformed" over time to make it linear with respect to the desired input intensity.

As mentioned above, even making the luminosity trend increasingly monotonic as a function of the duty cycle, the problem of the current rise time remains when the dimming pulse begins its "on" phase.

Taking into account that, with more than sufficient approximation, the luminosity obtained is a function of the area underlying the product of the function $I_{LED}(t)$, current on LEDs as a function of time, multiplied by the function $f_{switching}(t)$ which describes the switching signal and which is 1 when the driver is in the "on" phase and 0 when it is in the "off" phase(see equation (2)), the luminosity as a function of the duration $t_{on}$ of the dimming pulse is adjusted by the following equation:

$$L(t_{on}) = K \int_0^{t_{on}} I_{LED}(t) \cdot f_{switching}(t) dt \quad (4)$$

where K is a proportionality constant that can be ignored and is set at 1. The function $I_{LED}(t)$ can be approximated with a polygonal chain which is 0 in t=0 and rises up to the setpoint in a time equal to ti, as shown in Figure 4. This time has a duration subject to component tolerances and thermal deviation as explained above, but can be accurately identified by measuring the switching signal.

From the measurement of the switching signal it is also possible to measure the average duty cycle of the switching signal, defined $d_{switch}$. The current $I_{LED}(t)$ can then be written in the following approximate form:

$$I_{LED}(t) = \begin{cases} I_{setpoint} \cdot \dfrac{t}{t_1} & \text{if } 0 \leq t < t_1 \\ I_{setpoint} & \text{if } t \geq t_1 \end{cases} \quad (5)$$

From which it follows that the underlying area $L_{LED}(t)$, developed according to the equation (4) is:

$$L(t) = \begin{cases} \dfrac{I_{setpoint}}{2} \cdot \dfrac{t^2}{t_1} & \text{if } 0 \leq t < t_1 \\ I_{setpoint} \cdot \left( \dfrac{t_1}{2} + d_{switch} \cdot (t - t_1) \right) & \text{if } t \geq t_1 \end{cases} \quad (6)$$

The maximum luminosity $L_{max}$ is calculated by setting t=T, i.e. the period of the dimming PWM:

$$L_{max} = I_{setpoint} \cdot \left( \dfrac{t_1}{2} + d_{switch} \cdot (T - t_1) \right) \quad (7)$$

Wishing to obtain a fraction $d_{light}$ (with $0 < d_{light} < 1$) of the maximum luminosity, the target luminosity $L_{target}$ will be:

$$L_{target} = d_{light} \cdot L_{max} \quad (8)$$

Additionally, with $L_{rise}$ being the area underlying $I_{LED}(t)$ during the rise phase:

$$L_{rise} = L(t_1) = \frac{I_{setpoint} \cdot t_1}{2} \qquad\qquad (9)$$

It follows that the duration $t_{on}$ of the pulse needed to obtain an area $L_{target}$ is equal to:

$$t_{on} = \begin{cases} \sqrt{\dfrac{L_{target}}{L_{rise}}} \cdot t_1 & \text{if } 0 \le L_{target} < L_{rise} \\[2em] t_1 + \dfrac{1}{I_{setpoint}} \dfrac{L_{target} - L_{rise}}{d_{switch}} & \text{if } L_{target} \ge L_{rise} \end{cases} \qquad (10)$$

In the event that the period T of the dimming PWM is less than ti, the calculations should be adjusted as described below.

The equation (5) becomes:

$$I_{LED}(t) = I_{setpoint} \cdot \frac{t}{t_1} \qquad\qquad with \quad 0 \le t \le T < t_1 \quad (11)$$

The equation (6) becomes:

$$L_{LED}(t) = \frac{I_{setpoint}}{2} \cdot \frac{t^2}{t_1} \qquad with \quad 0 \le t \le T < t_1 \qquad\qquad (12)$$

The equation (7) becomes:

$$L_{max} = I_{setpoint} \cdot \left(\frac{T^2}{2t_1}\right) \qquad with \quad 0 \le t \le T < t_1 \qquad (13)$$

The equation (10) becomes:

$$t_{on} = \sqrt{\frac{L_{target}}{L_{rise}}} \cdot T \qquad\qquad (14)$$

The practical application of this technique may require minor corrections to the equation (6), which take into account various aspects, for example:

- the efficiency of the driver, slightly different between the rise and constant current phases;
- the average current of the "on" phase of switching, which is less than $I_{setpoint}$, as can be seen in Figure 4;
- the fact that the LED's luminous efficiency as a function of current is not linear, and especially at very low currents this factor may not be negligible.

Consequently, in one embodiment, in equation (6) in the first part with $t \le t_1$ a term in t is added, in addition to that in $t^2$, and a $d_{switch}$ multiplication factor is added in the second part:

$$L(t) = \begin{cases} \dfrac{I_{setpoint}}{2t_1} \cdot (t^2 + k_1 t) & \text{if } 0 \le t < t_1 \\[2em] I_{setpoint} \cdot \left( \dfrac{t_1}{2} + \dfrac{k_1}{2} + d_{switch} \cdot (t - t_1) \right) & \text{if } t \ge t_1 \end{cases} \tag{11}$$

Subsequent equations should then be corrected accordingly.

In a preferred embodiment, the two calculation methods of the duration $t_{on}$ of the dimming pulse described above are applied in succession.

In particular, first the duty cycle is deformed to make it linear and then the luminosity trend is made increasingly monotonic as a function of the duty cycle.

Consequently, in an advantageous embodiment, the modified duration $t_{on}$ of the dimming signal pulse is given by

$$t'_{on} = f_3(f_{10}(L_{target}, L_{max}, t_i)t)$$

where the functions $f_3$ and $f_{10}$ refer to equations (3) and (10) respectively, while ti is the sequence of times obtained by measuring the switching signal, represented by the function $f_{switching}(t)$ (equation (2)), generated by the switching driver.

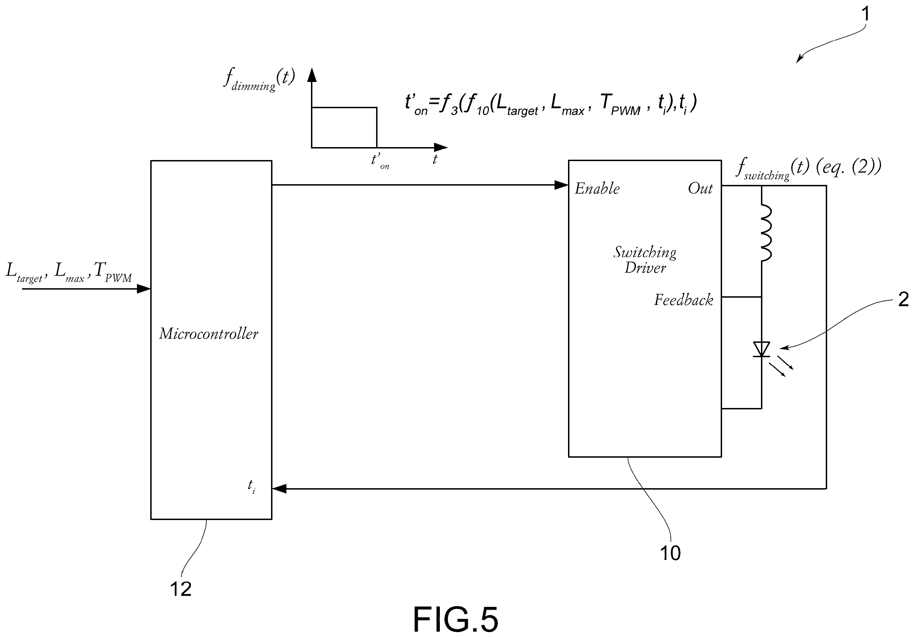

The driving method described above can be implemented with a driving device 1 of a light source 2, in the block diagram of Figure 5 identified as a LED, comprising at least one switching driver 10 suitable for generating a substantially constant driving current controlled by a switching signal ($f_{switching}t$)) definable by the function

$$f_{switching}(t) = \begin{cases} 1 & \text{if } t_{2k} \le t < t_{2k+1} \\ 0 & \text{if } t_{2k+1} \le t < t_{2k+2} \end{cases}, \quad k \ge 0.$$

The switching driver is driven by a pulse-type periodic dimming signal generated by a controller 12, such as a microcontroller unit. The duration of the dimming pulse $t_{on}$ with respect to the duration T of the period can be modulated to obtain a desired luminosity to obtain a desired luminosity value $L_{target}$ lower than a maximum luminosity value $L_{max}$ obtainable with a duration of the dimming pulse equal to the duration of the period T of the dimming signal.

The control unit has a switching signal reading input suitable for receiving a signal representative of the switching signal ($f_{switching}(t)$), for example the signal ti representing the sequence of switching signal rise and fall times. In addition, the desired luminosity value $L_{target}$, the maximum luminosity value $L_{max}$ and the duration of the period T of the dimming signal are stored in the control unit.

The control unit is then programmed, based on such input data, to calculate a modified duration $t'_{on}$ of the dimming signal pulse according to the driving method as described above in its possible embodiments.

It is to be noted that, in one embodiment, the sequence ti could be obtained prior to actual calculation of the modified duration of the pulse dimming signal, by means of a test dimming function $f_{dimming}$ (t) of sufficient duration to collect information about the sequence ti. Conversely, the $f_{dimming}$ (t) value could not be calculated since it depends on ti itself, thus creating a circular dependency. After this first test cycle, the ti measured at the previous cycle is used to calculate $f_{dimming}(t)$ for the next PWM cycle.

It should also be noted that the maximum luminosity $L_{max}$ is not always the same but is a function of the frequency f of the PWM, since the initial rise has a fixed duration and therefore a different incidence on the maximum underlying area. To prevent luminosity deviations when moving between frequencies, it is possible to calculate the minimum luminosity value $L_{max}(f)$, obtained with the highest PWM dimming frequency value, $f_{max}$. This value can be considered in the calculations, thus setting $L_{max}$ as a function of the dimming frequency, making sure that $L_{target}$ is always lower than $L_{max}(f_{max})$.

## Claims

1. Method for driving a light source by means of a controllable switching driver which is configured to generate, in an active state, a substantially constant driving current controlled by a square wave switching signal ($f_{switching}(t)$) having a switching driver operating frequency, the method comprising the steps of:

   - controlling said switching driver by a pulse-type periodic dimming signal, the frequency of the dimming signal being lower than the switching driver operating frequency,
- modulating the duration of the dimming pulse ($t_{on}$) with respect to the duration (T) of the period to obtain a desired luminosity value ($L_{target}$) lower than a maximum luminosity value ($L_{max}$) obtainable with a dimming pulse duration equal to the duration of the dimming signal period (T),

wherein, during the period of time defined by the duration of the pulse, the switching driver is in the active state in which the switching signal ($f_{switching}(t)$) is defined by the function

$$f_{switching}(t) = \begin{cases} 1 & \text{if } t_{2k} \le t < t_{2k+1} \\ 0 & \text{if } t_{2k+1} \le t < t_{2k+2} \end{cases}, k \ge 0,$$

in which function $t_k$ is a tuple, the even elements of which are the start times of the "on" parts of the switching signal and the odd elements are the end times of the switching signal, the method being **characterized by** the further steps of:

- measuring the switching signal ($f_{switching}(t)$),
- calculating, on the basis of the measured switching signal, a modified duration ($t'_{on}$) of the dimming pulse such that said pulse never ends in an instant of time in which the switching signal is equal to zero,
- modulating the duration of the dimming pulse by applying said modified duration ($t'_{on}$).

2. Method according to claim 1, wherein the modified duration ($t'_{on}$) of the dimming signal pulse is equal to

$$t'_{on} = f(t_{on}) = \begin{cases} t_{on} & \text{if } 0 \le t_{on} < t_1 \\ t_{2k+2} + \frac{t_{on} - t_{2k+1}}{t_{2k+3} - t_{2k+1}}(t_{2k+3} - t_{2k+2}) & \text{if } t_{2k+1} \le t_{on} < t_{2k+3} \end{cases}$$

, in which function $t_k$ is a tuple, the even elements of which are the start times of the "on" parts of the switching signal and the odd elements are the end times of the switching signal.

3. Method according to claim 1 or 2, wherein the duration of the dimming pulse ($t_{on}$) used for the calculation of the modified duration ($t'_{on}$) is equal to

$$t_{on} = \frac{L_{target}}{L_{max}} \cdot T$$

, in which function $L_{target}$ is a desired luminosity value, $L_{max}$ is a maximum luminosity value, and T is the duration of the dimming signal period.

4. Method according to claim 1 or 2, wherein, having defined that:

$I_{setpoint}$ is the value of the desired driving current;
$t_1$ is the instant of time in which the driving current reaches the $I_{setpoint}$ value starting from zero;
$d_{switch}$ is the average duration of the time intervals in which the switching signal ($f_{switching}(t)$) is equal to 1;
$L_{rise}$ is the luminosity at the instant $t_1$, and $L_{target}$ is a desired luminosity value, the duration of the dimming pulse ($t_{on}$) used for calculating the modified duration ($t'_{on}$) is equal to

$$t_{on} = \begin{cases} \sqrt{\dfrac{L_{target}}{L_{rise}}}\, t_1 & \text{if } 0 \le L_{target} < L_{rise} \\ t_1 + \dfrac{1}{I_{setpoint}} \cdot \dfrac{L_{target} - L_{rise}}{d_{switch}} & \text{if } L_{target} \ge L_{rise} \end{cases}$$

5. Method according to claim 4, wherein the luminosity $L_{rise}$ at the instant ti is given by:

$$L_{rise} = L(t_1) = \frac{I_{setpoint}}{2} \cdot t_1 ,$$

wherein luminosity L(t) is defined by the function

$$L(t) = \begin{cases} \dfrac{I_{setpoint}}{2t_1}(t^2 + k_1 t) & \text{if } 0 \leq t < t_1 \\[2em] I_{setpoint}\left(\dfrac{t_1}{2} + \dfrac{k_1}{2} + k_2 d_{switch}(t - t_1)\right) & \text{if } t \geq t_1 \end{cases}$$

, in which function k1 and k2 are constant values $\geq 0$.

6. A device for driving a light source (2), comprising a controllable switching driver which is configured to generate, in an active state, a substantially constant driving current controlled by a square wave switching signal ($f_{switching}(t)$) having a switching driver operating frequency, wherein the switching signal ($f_{switching}(t)$) is defined by the function

$$f_{switching}(t) = \begin{cases} 1 & \text{if } t_{2k} \leq t < t_{2k+1} \\ 0 & \text{if } t_{2k+1} \leq t < t_{2k+2} \end{cases}, \quad k \geq 0,$$

which function $t_k$ is a tuple, the even elements of which are the start times of the "on" parts of the switching signal and the odd elements are the end times of the switching signal, and a control unit (12) suitable to control the switching driver (10) with a pulse-type periodic dimming signal, the frequency of the dimming signal being lower than the switching driver operating frequency, wherein the duration of the dimming pulse ($t_{on}$) with respect to the duration (T) of the period is modulated to obtain a desired brightness value ($L_{target}$) lower than a maximum brightness value ($L_{max}$) obtainable with a duration of the dimming pulse equal to the duration of the period (T) of the dimming signal, the device being **characterized in that** the control unit has a switching signal read input suitable to receive a signal representative of the switching signal ($f_{switching}(t)$) and, knowing the desired brightness value ($L_{target}$), the maximum brightness value ($L_{max}$) and the duration of the period (T) of the dimming signal, is configured to perform the driving method according to any one of the preceding claims.

**Patentansprüche**

1. Verfahren zum Ansteuern einer Lichtquelle mittels eines steuerbaren Schalttreibers, der so konfiguriert ist, dass er in einem aktiven Zustand einen im Wesentlichen konstanten Treiberstrom erzeugt, der durch ein Rechteckwellenschaltsignal ($f_{switching}(t)$) mit einer Schalttreiberbetriebsfrequenz gesteuert wird, wobei das Verfahren die folgenden Schritte umfasst:

- das Steuern des Schalttreibers durch ein impulsartiges periodisches Dimmsignal, wobei die Frequenz des Dimmsignals niedriger ist als die Schalttreiberbetriebsfrequenz,
- das Modulieren der Dauer des Dimmimpulses ($t_{on}$) in Bezug auf die Dauer (T) der Periode, um einen gewünschten Leuchtstärkewert ($L_{target}$) zu erhalten, der niedriger ist als ein maximaler Leuchtstärkewert ($L_{max}$), der mit einer Dimmimpulsdauer gleich der Dauer der Dimmsignalperiode (T) erhältlich ist,
wobei, während der durch die Dauer des Impulses definierten Zeitspanne, der Schalttreiber im aktiven Zustand ist,
wobei das Schaltsignal ($f_{switching}(t)$) definiert ist durch die Funktion

$$f_{switching}(t) = \begin{cases} 1 & \text{wenn } t_{2k} \leq t < t_{2k+1} \\ 0 & \text{wenn } t_{2k+1} \leq t < t_{2k+2} \end{cases}, k \geq 0,$$

wobei in der Funktion $t_k$ ein Tupel ist, dessen gerade Elemente die Startzeiten der "Ein"-Teile des Schaltsignals sind und die ungeraden Elemente die Endzeiten des Schaltsignals sind,

wobei das Verfahren **gekennzeichnet ist durch** die weiteren Schritte:

- des Messens des Schaltsignals ($f_{switching}(t)$),
- des Berechnens einer modifizierten Dauer ($t'_{on}$)des Dimmimpulses auf der Basis des gemessenen Schaltsignals, so daß der Impuls niemals in einem Zeitmoment endet, in dem das Schaltsignal gleich Null ist,
- des Modulierens der Dauer des Dimmimpulses durch Anwenden der modifizierten Dauer ($t'on$).

2. Verfahren nach Anspruch 1, wobei die modifizierte Dauer ($t'_{on}$)des Dimmsignalimpulses gleich

$$t'_{on} = f(t_{on}) = \begin{cases} t_{on} & \text{wenn } 0 \leq t_{on} < t_1 \\ t_{2k+2} + \frac{t_{on}-t_{2k+1}}{t_{2k+3}-t_{2k+1}}(t_{2k+3} - t_{2k+2}) & \text{wenn } t_{2k+1} \leq t_{on} < t_{2k+3} \end{cases}$$

ist,
wobei in der Funktion $t_k$ ein Tupel ist, dessen gerade Elemente die Startzeiten der "Ein"-Teile des Schaltsignals sind und die ungeraden Elemente die Endzeiten des Schaltsignals sind.

3. Verfahren nach Anspruch 1 oder 2, wobei die Dauer des Dimmimpulses ($t_{on}$), die für die Berechnung der modifizierten Dauer ($t'_{on}$) verwendet wird, gleich

$$t_{on} = \frac{L_{target}}{L_{max}} \cdot T$$

ist,
wobei in der Funktion $L_{target}$ ein gewünschter Leuchtstärkewert ist, $L_{max}$ ein maximaler Leuchtstärkewert ist und T die Dauer der Dimmsignalperiode ist.

4. Verfahren nach Anspruch 1 oder 2, wobei, nachdem definiert wurde, dass $I_{setpoint}$ der Wert des gewünschten Treiberstroms ist;
ti der Zeitpunkt ist, in dem der Treiberstrom den $I_{setpoint}$-Wert ausgehend von Null erreicht;
$d_{switch}$ die durchschnittliche Dauer der Zeitintervalle ist, in denen das Schaltsignal ($f_{switching}(t)$) gleich 1 ist;
$L_{rise}$ die Leuchtstärke zum Zeitpunkt ti ist und
$L_{target}$ ein gewünschter Leuchtstärkewert ist,
die Dauer des Dimmimpulses ($t_{on}$), die zur Berechnung der modifizierten Dauer ($t'_{on}$) verwendet wird, gleich

$$t_{on} = \begin{cases} \sqrt{\frac{L_{target}}{L_{rise}}}\, t_1 & \text{wenn } 0 \leq L_{target} < L_{rise} \\ t_1 + \frac{1}{I_{setpoint}} \cdot \frac{L_{target} - L_{rise}}{d_{switch}} & \text{wenn } L_{target} \geq L_{rise} \end{cases}$$

ist.

5. Verfahren nach Anspruch 4, wobei die Leuchtstärke $L_{rise}$ zum Zeitpunkt ti gegeben ist durch:

$$L_{rise} = L(t_1) = \frac{I_{setpoint}}{2} \cdot t_1,$$

wobei die Leuchtstärke L(t) definiert ist durch die Funktion

$$L(t) = \begin{cases} \dfrac{I_{setpoint}}{2t_1}(t^2 + k_1 t) & \text{wenn } 0 \le t < t_1 \\[4mm] I_{setpoint}\left(\dfrac{t_1}{2} + \dfrac{k_1}{2} + k_2 d_{switch}(t - t_1)\right) & \text{wenn } t \ge t_1 \end{cases}$$

wobei in der Funktion k1 und k2 konstante Werte $\ge 0$ sind.

6. Vorrichtung zur Ansteuerung einer Lichtquelle (2), umfassend einen steuerbaren Schalttreiber, der so konfiguriert ist, dass er in einem aktiven Zustand einen im Wesentlichen konstanten Treiberstrom erzeugt, der durch ein Rechteckwellenschaltsignal ($f_{switching}(t)$) mit einer Schalttreiberbetriebsfrequenz gesteuert wird, wobei das Schaltsignal ($f_{switching}(t)$) definiert ist durch die Funktion

$$f_{switching}(t) = \begin{cases} 1 & \text{wenn } t_{2k} \le t < t_{2k+1} \\ 0 & \text{wenn } t_{2k+1} \le t < t_{2k+2} \end{cases}, k \ge 0,$$

wobei in der Funktion $t_k$ ein Tupel ist, dessen gerade Elemente die Startzeiten der "Ein"-Teile des Schaltsignals sind und die ungeraden Elemente die Endzeiten des Schaltsignals sind,
und eine Steuereinheit (12), die geeignet ist, den Schalttreiber (10) mit einem impulsartigen periodischen Dimmsignal zu steuern, wobei die Frequenz des Dimmsignals niedriger ist als die Schalttreiberbetriebsfrequenz, wobei die Dauer des Dimmimpulses ($t_{on}$) in Bezug auf die Dauer (T) der Periode moduliert wird, um einen gewünschten Leuchtstärkewert ($L_{target}$) zu erhalten, der niedriger ist als ein maximaler Leuchtstärkewert ($L_{max}$), der mit einer Dauer des Dimmimpulses gleich der Dauer der Periode (T) des Dimmsignals erhältlich ist,
wobei die Vorrichtung **dadurch gekennzeichnet ist, dass** die Steuereinheit einen Schaltsignalleseeingang aufweist, der geeignet ist, ein für das Schaltsignal ($f_{swit-ching}(t)$) repräsentatives Signal zu empfangen, und in Kenntnis des gewünschten Leuchtstärkewerts ($L_{target}$), des maximalen Leuchtstärkewerts ($L_{max}$) und der Dauer der Periode (T) des Dimmsignals so konfiguriert ist, dass sie das Ansteuerungsverfahren nach einem der vorhergehenden Ansprüche durchführt.

## Revendications

1. Procédé permettant de commander une source lumineuse au moyen d'un dispositif de commande de commutation pouvant être contrôlé qui est configuré pour générer, dans un état actif, un courant de commande sensiblement constant contrôlé par un signal de commutation à onde carrée ($f_{switching}(t)$) ayant une fréquence de fonctionnement de dispositif de commande de commutation, le procédé comprenant les étapes consistant à :

- contrôler ledit dispositif de commande de commutation par un signal de gradation périodique de type impulsion, la fréquence du signal de gradation étant inférieure à la fréquence de fonctionnement de commande de commutation,
- moduler la durée de l'impulsion de gradation ($t_{on}$) par rapport à la durée (T) de la période pour obtenir une valeur de luminosité souhaitée ($L_{target}$) inférieure à une valeur de luminosité maximale ($L_{max}$) pouvant être obtenue avec une durée d'impulsion de gradation égale à la durée de la période de signal de gradation (T),

dans lequel,
pendant la période de temps définie par la durée de l'impulsion, le dispositif de commande de commutation est dans l'état actif dans lequel le signal de commutation ($f_{switching}(t)$) est défini par la fonction

$$f_{switching}(t) = \begin{cases} 1 \; si \; t_{2k} \le t < t_{2k+1} \\ 0 \; si \; t_{2k+1} \le t < t_{2k+2} \end{cases}, k \ge 0,$$

dans laquelle fonction, $t_k$ est un tuple, dont les éléments pairs sont les temps de début des parties « on » du signal de commutation et les éléments impairs sont les temps de fin du signal de commutation,
le procédé étant **caractérisé par** les étapes supplémentaires consistant à :

- mesurer le signal de commutation ($f_{switching}(t)$),
- calculer, sur la base du signal de commutation mesuré, une durée modifiée ($t'_{on}$) de l'impulsion de gradation de sorte que ladite impulsion ne se termine jamais à un instant de temps où le signal de commutation est égal à zéro,
- moduler la durée de l'impulsion de gradation en appliquant ladite durée modifiée ($t'_{on}$).

2. Procédé selon la revendication 1, dans lequel la durée modifiée ($t'_{on}$) de l'impulsion de signal de gradation est égale à

$$t'_{on} = f(t_{on}) = \begin{cases} t_{on} & si \ 0 \leq t_{on} < t_1 \\ t_{2k+2} + \frac{t_{on}-t_{2k+1}}{t_{2k+3}-t_{2k+1}}(t_{2k+3} - t_{2k+2}) & si \ t_{2k+1} \leq t_{on} < t_{2k+3} \end{cases}$$

dans laquelle fonction, $t_k$ est un tuple, dont les éléments pairs sont les temps de début des parties « on » du signal de commutation et les éléments impairs sont les temps de fin du signal de commutation.

3. Procédé selon la revendication 1 ou 2, dans lequel la durée de l'impulsion de gradation ($t_{on}$) utilisée pour le calcul de la durée modifiée ($t'_{on}$) est égale à

$$t_{on} = \frac{L_{target}}{L_{max}} \cdot T$$

dans laquelle fonction, $L_{target}$ est une valeur de luminosité souhaitée, $L_{max}$ est une valeur de luminosité maximale, et T est la durée de la période de signal de gradation.

4. Procédé selon la revendication 1 ou 2, dans lequel, étant défini que :

$I_{setpoint}$ est la valeur du courant de commande souhaité ;
$t_1$ est l'instant de temps où le courant de commande atteint la valeur $I_{setpoint}$ en partant de zéro ;
$d_{switch}$ est la durée moyenne des intervalles de temps pendant lesquels le signal de commutation ($f_{switching}(t)$) est égal à 1 ;
$L_{rise}$ est la luminosité à l'instant $t_1$, et
$L_{target}$ est une valeur de luminosité souhaitée,
la durée de l'impulsion de gradation ($t_{on}$) utilisée pour calculer la durée modifiée ($t'_{on}$) est égale à

$$t_{on} = \begin{cases} \sqrt{\frac{L_{target}}{L_{rise}}} t_1 & si \ 0 \leq L_{target} < L_{rise} \\ t_1 + \frac{1}{I_{setpoint}} \cdot \frac{L_{target} - L_{rise}}{d_{switch}} & si \ L_{target} \geq L_{rise} \end{cases}$$

5. Procédé selon la revendication 4, dans lequel la luminosité $L_{rise}$ à l'instant $t_1$ est donnée par :

$$L_{rise} = L(t_1) = \frac{I_{setpoint}}{2} \cdot t_1,$$

où la luminosité $L(t)$ est définie par la fonction

$$L(t) = \begin{cases} \dfrac{I_{setpoint}}{2t_1}(t^2 + k_1 t) & si\ 0 \leq t < t_1 \\[2em] I_{setpoint}\left(\dfrac{t_1}{2} + \dfrac{k_1}{2} + k_2 d_{switch}(t - t_1)\right) & si\ t \geq t_1 \end{cases}$$

dans laquelle fonction, k1 et k2 sont des valeurs constantes $\geq 0$.

6. Dispositif permettant de commander une source lumineuse (2), comprenant un dispositif de commande de commutation pouvant être contrôlé qui est configuré pour générer, dans un état actif, un courant de commande sensiblement constant contrôlé par un signal de commutation à onde carrée ($f_{switching}(t)$) ayant une fréquence de fonctionnement de dispositif de commande de commutation, dans lequel le signal de commutation ($f_{switching}(t)$) est défini par la fonction

$$f_{switching}(t) = \begin{cases} 1\ si\ t_{2k} \leq t < t_{2k+1} \\ 0\ si\ t_{2k+1} \leq t < t_{2k+2} \end{cases}, k \geq 0,$$

laquelle fonction $t_k$ est un tuple, dont les éléments pairs sont les temps de début des parties « on » du signal de commutation et les éléments impairs sont les temps de fin du signal de commutation,
et une unité de contrôle (12) adaptée pour contrôler le dispositif de commande de commutation (10) avec un signal de gradation périodique de type impulsion, la fréquence du signal de gradation étant inférieure à la fréquence de fonctionnement de dispositif de commande de commutation, dans lequel la durée de l'impulsion de gradation ($t_{on}$) par rapport à la durée (T) de la période est modulée pour obtenir une valeur de luminosité souhaitée ($L_{target}$) inférieure à une valeur de luminosité maximale ($L_{max}$) pouvant être obtenue avec une durée de l'impulsion de gradation égale à la durée de la période (T) du signal de gradation,
le dispositif étant **caractérisé en ce que** l'unité de contrôle a une entrée de lecture de signal de commutation adaptée pour recevoir un signal représentatif du signal de commutation ($f_{switching}(t)$) et, connaissant la valeur de luminosité souhaitée ($L_{target}$), la valeur de luminosité maximale ($L_{max}$) et la durée de la période (T) du signal de gradation, est configurée pour effectuer le procédé de commande selon l'une quelconque des revendications précédentes.

FIG.1

FIG.2

FIG.3

FIG.4

EP 3 554 197 B1

$$t'_{on}=f_3(f_{10}(L_{target}, L_{max}, T_{PWM}, t_i), t_i)$$

$f_{switching}(t) \ (eq. \ (2))$

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014361704 A1
- US 2016360589 A1
- WO 2015121079 A1
- CN 105764204 B